# EUROPÄISCHE PATENTSCHRIFT

(11) **EP 1 593 294 B1**
(45) Veröffentlichungstag und Bekanntmachung des Hinweises auf die Patenterteilung: **21.01.2009**
(21) Anmeldenummer: 05007651.2
(22) Anmeldetag: 07.04.2005
(51) Int. Cl.: A01B 59/06, A01D 34/66

(54) **Aufhängungsvorrichtung für ein Mähwerk**
Mower coupling device
Dispositif d'accouplement pour faucheuse

(30) Priorität: 06.05.2004 DE 102004022873
(43) Veröffentlichungstag der Anmeldung: 09.11.2005
(73) Patentinhaber: Alois Pöttinger Maschinenfabrik GmbH, 4710 Grieskirchen (AT)
(72) Erfinder: Lehner, Josef, Dipl.-Ing., 4732 St. Thomas (AT); Reiter, Thomas, Dipl.-Ing., 4707 Schlüsslberg (AT)
(74) Vertreter: Thoma, Michael

(56) Entgegenhaltungen:
- DE-A1- 3 707 677
- DE-A1- 4 007 735
- DE-A1- 4 437 587
- DE-A1- 19 624 396
- US-A- 5 193 330

## Beschreibung

Die vorliegende Erfindung betrifft eine Aufhängungsvorrichtung für eine Landmaschine, insbesondere frontangebautes Mähwerk, mit einem Anbaubock, der über eine Dreipunktanlenkung am Schlepper anbaubar ist, einem ersten Lenker, der am Anbaubock angelenkt ist und von diesem in Fahrtrichtung des Schleppers auskragt, sowie einem zweiten und dritten Lenker, die jeweils einerseits gelenkig an dem ersten Lenker und andererseits gelenkig an einem Maschinenrahmen der Landmaschine angelenkt sind, so dass der Maschinenrahmen von dem ersten und zweiten Lenker nach Art eines Viergelenks an dem ersten Lenker aufgehängt und auf und ab bewegbar ist.

Frontangebaute Mähwerke besitzen üblicherweise einen Anbaubock, mittels dessen sie an der an sich bekannten Dreipunktanlenkung eines entsprechenden Schleppers angebaut werden können. Das Mähwerk kann zwar grundsätzlich durch das auf die Dreipunktanlenkung wirkende Hubwerk des Schleppers angehoben bzw. abgesenkt werden, dies ist jedoch nicht ausreichend bzw. ungeeignet, um eine Bodenanpassung des Mähwerks in ausreichender Geschwindigkeit und mit ausreichender Präzision zu erreichen. Bei Bodenwellen oder anderen Unebenheiten ist es notwendig, das Mähwerk mit entsprechender Geschwindigkeit anzuheben und abzusenken sowie ggf. in der Winkelanstellung an die entsprechende Bodenkontur anzupassen, um einen gleichmäßigen präzisen Schnitt zu erreichen und ein Einstechen des Mähwerks in den Boden zu vermeiden. Es wurde deshalb bereits vorgeschlagen, das Mähwerk relativ zu dem an der Dreipunktanlenkung befestigten Anbaubock beweglich aufzuhängen. Die DE 196 24 396 A1 zeigt ein frontanbaubares Mähwerk, dessen die Schneidwerkzeuge tragender Maschinenrahmen über zwei parallelogrammartige Lenker an dem Anbaubock beweglich aufgehängt ist. Das parallelogrammartige Viergelenk erlaubt es, den Maschinenrahmen mit den daran befestigten Mähwerkzeugen relativ zum Anbaubock und damit unabhängig vom Hubwerk des Schleppers auf und ab zu bewegen. Diese Aufhängung erlaubt jedoch nur einen begrenzten Schwenkbereich des Mähwerks. Zudem ist die Bodenanpassung nur ein Kompromiss und nicht für lange Bodenwellen und kurze Bodenwellen gleichermaßen optimal.

Eine Aufhängungsvorrichtung der eingangs genannten Art zeigt die DE 40 07 735 C2. An dem an der Dreipunktanlenkung des Schleppers befestigten Anbaubock ist ein starrer Lenker nach vorne auskragend befestigt. An dem frei auskragenden Ende des ersten Lenkers sind zwei weitere Lenker sich schräg nach hinten erstreckend angelenkt, die den Maschinenrahmen des Mähwerks tragen. Sie bilden ein Viergelenk, über das der die Schneidwerkzeuge tragende Maschinenrahmen auf und ab geschwenkt werden kann. Zusätzlich kann der Maschinenrahmen relativ zu den das Viergelenk bildenden Lenkern verschwenkt werden. Hierzu laufen die Gelenkpunkte der beiden genannten Lenker längsbeweglich in einer Schlitzführung, die jeweils in Längsrichtung des jeweiligen Lenkers verläuft. Hierdurch erhält der Maschinenrahmen eine Drehbeweglichkeit um eine Querachse, die es erlaubt, dass sich die Mähwerkzeuge beim Befahren von Bodenwellen schrägstellen können.

Auch wenn diese Aufhängungsvorrichtung eine verbesserte Bodenanpassung bezüglich schräger Querwellen ermöglicht, ist sie doch noch nicht ganz zufriedenstellend. Insbesondere ist auch hier die mögliche Bodenanpassung begrenzt und für stark kupiertes Gelände nicht ausreichend.

Der vorliegenden Erfindung liegt daher die Aufgabe zugrunde, eine verbesserte Aufhängungsvorrichtung der genannten Art zu schaffen, die Nachteile des Standes der Technik vermeidet und letzteren in vorteilhafter Weise weiterbildet. Vorzugsweise soll eine weiter verbesserte Bodenanpassung erreicht werden.

Diese Aufgabe wird erfindungsgemäß durch eine Aufhängungsvorrichtung gemäß Patentanspruch 1 gelöst. Bevorzugte Ausführungsformen der Erfindung sind Gegenstand der abhängigen Ansprüche.

Erfindungsgemäß ist also auch der erste Lenker selbst, an dem der zweite und dritte Lenker jeweils schwenkbar angelenkt ist, schwenkbar gelagert, und zwar um eine quer zur Fahrtrichtung verlaufende Schwenkachse. Hierdurch kann eine Bodenanpassung einerseits durch eine Schwenkbewegung des die Arbeitswerkzeuge tragenden Maschinenrahmens relativ zu dem ersten Lenker erfolgen, die von den parallelogrammartig wirkenden, das Viergelenk bildenden zweiten und dritten Lenkern geführt wird, die schwenkbar an dem ersten Lenker angelenkt sind. Andererseits kann eine Bodenanpassung zusätzlich dadurch erfolgen, dass der erste Lenker zusammen mit den daran angelenkten zweiten und dritten Lenkern und dem wiederum daran angelenkten Maschinenrahmen an dem Anbaubock auf und ab schwenkt. Die gesamte Bodenanpass-Bewegung sowie der gesamte Neigungswinkel des Maschinenrahmens und der daran befestigten Arbeitswerkzeuge ergibt sich aus der Summe bzw. Differenz der Bewegungen des ersten Lenkers relativ zum Anbaubock und der zweiten und dritten Lenker relativ zum ersten Lenker sowie der entsprechenden Schwenkwinkel. Durch die zusätzliche Beweglichkeit des ersten, vom Anbaubock auskragenden Lenkers, ist die Bodenanpassung weniger eingeschränkt. Selbst wenn die beiden am ersten Lenker angelenkten Lenker des Viergelenks die Grenzen ihres Bewegungsbereiches erreichen, kann eine weitere Bewegung des Mähwerks beispielsweise nach oben dadurch erfolgen, dass sich der erste Lenker zusätzlich weiter bewegt. Zudem erlaubt der zusätzliche Freiheitsgrad der Aufhängungsvorrichtung eine bessere Abstimmung des Ansprechverhaltens an verschiedene Bodenkonturen.

Grundsätzlich wäre es möglich, dass die Bewegungen des zweiten und dritten Lenkers einerseits und des ersten Lenkers andererseits voneinander entkoppelt sind. Hierdurch wäre es möglich, unterschiedliche Ansprechverhalten für unterschiedliche Bodenkonturen zu erreichen. Beispielsweise wäre es möglich, dass auf kleine Bodenwellen über Bewegungen des Viergelenks ein rasches Ansprechen sichergestellt ist, während für längere und höhere Bodenwellen eine Bewegung des ersten Lenkers ggf. zusätzlich zu einer Bewegung der zweiten und dritten Lenker erfolgt.

In Weiterbildung der Erfindung jedoch wird die Bewegung des ersten Lenkers in Abhängigkeit der Bewegung der zweiten und dritten Lenker gesteuert. Insbesondere ist eine Steuervorrichtung vorgesehen, die die Schwenkstellung des ersten Lenkers relativ zum Anbaubock in Abhängigkeit der Stellung des die Arbeitswerkzeuge tragenden Maschinenrahmens relativ zum ersten Lenker steuert. Bewegt sich der Maschinenrahmen über das Viergelenk relativ zum ersten Lenker, wird auch dieser entsprechend bewegt.

Die Steuervorrichtung kann grundsätzlich verschieden ausgebildet sein. Nach einer vorteilhaften Ausführung der Erfindung ist die Steuervorrichtung derart ausgebildet, dass der erste Lenker einerseits und die zweiten und dritten Lenker andererseits gegenläufig schwenken.

Insbesondere kann die Steuervorrichtung von einem vierten Lenker gebildet sein, der einerseits gelenkig am Anbaubock und andererseits gelenkig an dem zweiten und/oder dritten Lenker angelenkt ist. Die Steuervorrichtung kann also als Zwangssteuerung ausgebildet sind, durch die eine Bewegung des Maschinenrahmens bzw. des Viergelenks relativ zum ersten Lenker zwangsweise eine Bewegung des besagten ersten Lenkers bewirkt.

Die Hebelverhältnisse des die Zwangssteuerung bewirkenden vierten Lenkers können an die gewünschte Bewegungscharakteristik angepasst sein. Nach einer bevorzugten Ausführung der Erfindung liegt der Anlenkpunkt des ersten bzw. dritten Lenkers an dem ersten Lenker zwischen dem Anlenkpunkt des Maschinenrahmens an diesem Lenker und dem Anlenkpunkt des vierten Lenkers an dem genannten zweiten oder dritten Lenker. Hierdurch wird eine gegenläufige Schwenkbewegung des Viergelenks und des ersten Lenkers erzeugt.

Vorzugsweise sind die Übersetzungsverhältnisse der Steuervorrichtung derart getroffen, dass bei einer größeren Schwenkbewegung des Viergelenks über einen größeren Schwenkwinkel eine kleinere Schwenkbewegung des ersten Lenkers über einen entsprechend kleineren Schwenkwinkel erfolgt. Dies kann dadurch erreicht werden, dass der Anlenkpunkt des vierten Lenkers näher am Drehpunkt des zweiten bzw. dritten Lenkers als der Anlenkpunkt des Maschinenrahmens liegt. Insbesondere kann der Abstand zwischen dem Drehpunkt des zweiten bzw. dritten Lenkers vom Anlenkpunkt des vierten Lenkers weniger als halb so groß wie der Abstand des Drehpunkts des zweiten bzw. dritten Lenkers vom Anlenkpunkt des Maschinenrahmens an diesem Lenker sein.

Um eine Voreinstellung bzw. eine Änderung der Grundeinstellung vorsehen zu können, kann der vierte Lenker längenveränderlich sein. Dies kann einerseits dadurch erreicht werden, dass der Lenker teleskopierbar ausgebildet ist. Anstelle einer unmittelbaren Längenänderung des vierten Lenkers selbst könnte auch vorgesehen sein, dass dieser über Langlöcher am Anbaubock oder dem Viergelenk geführt ist, so dass sich nur die effektive Länge, nicht jedoch die Länge des Lenkers selbst ändert. Vorzugsweise erfolgt eine entsprechende Vorspannung in eine Ausgangsstellung. Es kann auch eine veränderliche Fixierung in eine gewünschte Längeneinstellung vorgesehen sein.

Anstelle einer Zwangssteuerung durch einen vierten Lenker kann auch eine Kolbenzylindereinheit vorgesehen sein, die einerseits gelenkig an dem ersten Lenker und andererseits gelenkig an dem Anbaubock angelenkt ist. Um die durch die Kolbenzylindereinheit bewirkten Bewegungen des ersten Lenkers auf die Bewegungen des zweiten und dritten Lenkers abstimmen zu können, kann die Steuervorrichtung weiterhin einen Abstandsmesser zur Messung des Abstands des Maschinenrahmens bzw. der daran befestigen Arbeitswerkzeuge vom ersten Lenker aufweisen. Alternativ oder zusätzlich kann ein Neigungsmesser vorgesehen sein, der die Neigung des zweiten und/oder des dritten Lenkers gegenüber dem ersten Lenker bestimmt. Die Steuervorrichtung kann die Kolbenzylindereinheit in Abhängigkeit des Signals des Abstandsmessers und/oder des Signals des Neigungsmessers ansteuern, so dass der erste Lenker in Abhängigkeit des Abstands des Maschinenrahmens vom ersten Lenker und/oder der Neigung der Lenker des Viergelenks bewegt wird.

Vorteilhafterweise besitzt die Steuervorrichtung einen Bewegungsdämpfer, so dass Bewegungen des Viergelenks gedämpft in Bewegungen des ersten Lenkers umgesetzt werden. Sofern eine Zwangssteuerung durch den zuvor genannten vierten Lenker vorgesehen ist, kann der Bewegungsdämpfer diesem vierten Lenker zugeordnet sein, insbesondere dann, wenn der vierte Lenker längenveränderlich ausgebildet ist. Der Bewegungsdämpfer dämpft vorzugsweise die Veränderungen der Länge des besagten vierten Lenkers.

Ist eine Kolbenzylindereinheit zur Bewegung des ersten Lenkers vorgesehen, kann der Dämpfer dieser Kolbenzylindereinheit zugeordnet sein. Nach einer Ausführung der Erfindung kann die Dämpfung durch geeignete Wahl des die Kolbenzylindereinheit beaufschlagenden Fluids bewirkt werden.

In Weiterbildung der Erfindung erlaubt die Anlenkvorrichtung auch Schwenkbewegungen des Maschinenrahmens relativ zum Viergelenk, insbesondere um eine Queranpassung des Mähwerks an schräge Bodenkonturen zu erlauben. Insbesondere kann die Aufhängung des Maschinenrahmens an dem Viergelenk Schwenkbewegungen des Maschinenrahmens um eine in Fahrtrichtung verlaufende Schwenkachse erlauben. Zusätzlich oder alternativ kann die Aufhängung auch Schwenkbewegungen des Maschinenrahmens relativ zu dem Viergelenk um eine quer zur Fahrtrichtung verlaufende Achse erlauben, so dass das Mähwerk begrenzt nach vorne bzw. hinten kippen kann, um eine ganz feine Bodenanpassung an Querwellen zu gestatten. Die zusätzlichen Schwenkfreiheitsgrade können dadurch erreicht werden, dass die zweiten und dritten Lenker mit dem Maschinenrahmen über Kugelgelenke verbunden sind. Alternativ können die Anlenkpunkte des Maschinenrahmens an dem zweiten und/oder dritten Lenker in Längsnuten geführt sein.

In Weiterbildung der Erfindung kann vorgesehen sein, dass der zweite und/oder der dritte Lenker längenveränderbar, insbesondere teleskopierbar, ausgebildet ist. Auch hierdurch kann eine zusätzliche Pendelbewegung des Maschinenrahmens und der daran befestigten Arbeitswerkzeuge nach vorne bzw. hinten erreicht werden. Der zweite und/oder dritte Lenker kann als Kolbenzylindereinheit ausgebildet sein, die fremdenergiebetätigt werden kann.

In Weiterbildung der Erfindung erstrecken sich der zweite und der dritte Lenker jeweils von ihren Anlenkpunkten am ersten Lenker nach hinten zum Anbaubock hin. Das Mähwerk ist sozusagen nachlaufend an dem nach vorne auskragenden freien Ende des ersten Lenkers angeordnet. Der Maschinenrahmen bzw. die daran befestigten Arbeitswerkzeuge sind zwischen dem auskragenden Ende des ersten Lenkers und dem Anbaubock angeordnet. Hierdurch wird eine kompakte Anordnung der Aufhängungsvorrichtung erreicht.

Die Neigung des zweiten und dritten Lenkers zueinander sowie das Längenverhältnis dieser beiden Lenker sind derart getroffen, dass beim Nachoben- bzw. Nachuntenschwenken des Maschinenrahmens dieser die gewünschte Änderung des Anstellwinkels ausführt, wobei gleichzeitig die Winkeländerung des ersten Lenkers berücksichtigt wird. Nach einer bevorzugten Ausführung der Erfindung können die zweiten und dritten Lenker im gesamten vorgesehenen Arbeitsbereich bezüglich ihrer Längsachsen im wesentlichen parallel zueinander angeordnet sein. Vorzugsweise weisen sie einen Winkelversatz zueinander von weniger als 20° auf.

In Weiterbildung der Erfindung ist der erste, vom Anbaubock auskragende Lenker wesentlich länger als der zweite Lenker oder der dritte Lenker. Vorzugsweise besitzen der zweite und/oder der dritte Lenker eine Länge, die weniger als 75 %, vorzugsweise weniger als 50 % der Länge des ersten Lenkers beträgt.

Vorteilhafterweise kann das Mähwerk unabhängig von der Hubvorrichtung des Schleppers angehoben und abgesenkt werden. Es kann hierzu ein Kraftheber zum Anheben der Landmaschine relativ zum Anbaubock vorgesehen sein. Vorteilhafterweise ist der Kraftheber einerseits am Maschinenrahmen und andererseits an dem ersten Lenker oder unmittelbar am Anbaubock angelenkt. Der Kraftheber ist vorzugsweise fremdkraftbetätigt, insbesondere eine druckbetätigte Kolbenzylindereinheit.

In Weiterbildung der Erfindung ist eine Entlastungsfedereinrichtung zur zumindest teilweisen Aufnahme des Gewichts der Landmaschine vorgesehen.

Die Entlastungsfedereinrichtung kann eine Feder aufweisen, die einerseits am Maschinenrahmen und andererseits am Anbaubock angreift.

Alternativ oder zusätzlich kann die Entlastungsfedereinrichtung eine erste Feder besitzen, die einerseits am Maschinenrahmen und/oder am zweiten bzw. dritten Lenker und andererseits am ersten Lenker angreift, und weiterhin eine zweite Feder besitzen, die einerseits am ersten Lenker und andererseits am Anbaubock angreift.

Die Erfindung wird nachfolgend anhand zweier bevorzugter Ausführungsbeispiele näher erläutert. In den Zeichnungen zeigen:
- Fig. 1:: eine Seitenansicht einer ein Mähwerk tragenden Aufhängungsvorrichtung zum Frontanbau an einen Schlepper nach einer ersten bevorzugten Ausführungsform in einer Betriebsstellung auf ebenem Gelände,
- Fig. 2:: die Aufhängungsvorrichtung aus Fig. 1 beim Einfahren in eine Bodensenke,
- Fig. 3:: die Aufhängungsvorrichtung aus den vorhergehenden Figuren in einer angehobenen Transportstellung, und
- Fig. 4:: eine Aufhängungsvorrichtung für ein frontangebautes Mähwerk in einer Darstellung ähnlich Fig. 1 mit einer gegenüber der Ausführung in Fig. 1 veränderten Anlenkung des Mähwerkrahmens mit einem zusätzlichen Freiheitsgrad.

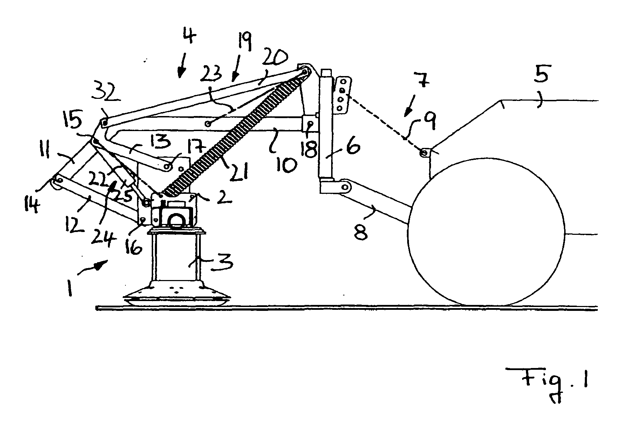

Das in den Figuren dargestellte Mähwerk 1 umfasst einen sich quer zur Fahrtrichtung und damit senkrecht zur Zeichenebene der Figur 1 erstreckenden Maschinenrahmen 2, an dem nebeneinander mehrere Trommelmäher 3 befestigt sind, die jeweils um aufrechte Drehachsen umlaufen und von denen in Figur 1 nur eines zu sehen ist.

Das Mähwerk 1 ist an einer Aufhängungsvorrichtung 4 gelagert, mit Hilfe derer das Mähwerk 1 am Bug eines Schleppers 5 anbaubar ist. Hierzu umfasst die Aufhängungsvorrichtung 4 einen Anbaubock 6, der an der an sich üblichen Dreipunktanienkung 7 des Schleppers 5, die zwei Unterlenker 8 sowie einen Oberlenker 9 umfasst, angebaut werden kann. Der starre Anbaubock 6 besitzt hierzu zwei voneinander beabstandete Unterlenkeranbaupunkte sowie einen zentralen Oberlenkeranlenkpunkt.

Die Aufhängungsvorrichtung 4 umfasst einen ersten Lenker 10, der an dem Anbaubock 6 befestigt ist und von diesem in Fahrtrichtung des Schleppers nach vorne auskragt. Wie Figur 1 zeigt, erstreckt sich der erste Lenker 10 in der Betriebsstellung bei ebenem Gelände von dem Anbaubock 6 im wesentlichen waagrecht nach vorne. Der erste Lenker 10 besitzt dabei einen vorderen, nach unten abgekröpften Endabschnitt 11, an dem der Maschinenrahmen 2 angelenkt ist. Wie Figur 1 zeigt, sind an dem vorderen Endabschnitt des ersten Lenkers 10 ein zweiter Lenker 12 sowie ein dritter Lenker 13 jeweils gelenkig angelenkt, und zwar jeweils um eine zur Fahrtrichtung sich quer erstreckende Achse 14 bzw. 15. Der zweite Lenker 12 sowie der dritte Lenker 13 erstrecken sich jeweils schräg nach hinten und unten zum Anbaubock 6 hin und sind mit ihren rückwärtigen Enden gelenkig mit dem Maschinenrahmen 2 verbunden, und zwar über ebenfalls quer zur Fahrtrichtung verlaufende Achsen 16 bzw. 17. Die zweiten und dritten Lenker 12 und 13 sind parallelogrammartig angeordnet und bilden ein Viergelenk, mit Hilfe dessen der Maschinenrahmen 2 und die daran befestigten Trommelmäher 3 relativ zum ersten Lenker beweglich gelagert sind. Wie Figur 1 zeigt, erstrecken sich die zweiten und dritten Lenker nur leicht geneigt zueinander, wobei der zweite Lenker 12 etwas länger ist als der dritte Lenker 13.

Es ist nicht nur das von den zweiten und dritten Lenkern 12 und 13 gebildete Viergelenk relativ zum ersten Lenker 10 schwenkbar. Zusätzlich ist der gesamte erste Lenker 10 zusammen mit dem daran angelenkten Viergelenk und dem wiederum daran angelenkten Maschinenrahmen 2 schwenkbar, so dass er auf und ab wippen kann. Wie Figur 1 zeigt, ist der erste Lenker 10 um eine quer zur Fahrtrichtung, im wesentlichen horizontale Schwenkachse 18 schwenkbar an dem Anbaubock 6 angelenkt.

Die Schwenkbewegungen des Viergelenks, das von dem zweiten Lenker 12 und dem dritten Lenker 13 gebildet wird, und die Schwenkbewegung des ersten Lenkers 10 relativ zum Anbaubock 6 sind relativ zueinander zwangsgesteuert. Die entsprechende Steuervorrichtung 19 wird von einem vierten Lenker 20 gebildet, der einerseits gelenkig am Anbaubock 6 und andererseits gelenkig am dritten Lenker 13 angelenkt ist. Wie Figur 1 zeigt, ist der dritte Lenker 13 als Kniehebel ausgebildet, der an seinem einen Ende mit dem Maschinenrahmen 2 verbunden ist und an seinem anderen Ende mit dem vierten Lenker 20 verbunden ist, wobei der Drehpunkt 15 des dritten Lenkers 13 zwischen den Anlenkpunkten des vierten Lenkers 20 und des Maschinenrahmens 2 im Bereich der Verbindung der beiden Schenkel des Kniehebels liegt. Der obere Schenkel, an dem der vierte Lenker 20 angelenkt ist, ist dabei wesentlich kürzer als der untere Schenkel, an dem der Maschinenrahmen 2 angelenkt ist. In der gezeichneten Ausführung beträgt die Länge des oberen Schenkels nur etwa ein Viertel der Länge des unteren Schenkels. Es versteht sich jedoch, dass das Längenverhältnis verändert werden kann, um die gewünschten Hebelverhältnisse zu erzielen.

Zur Gewichtsentlastung ist eine Federeinrichtung 21 vorgesehen. In der gezeichneten Ausführungsform umfasst sie eine einzelne Feder bzw. mehrere parallel geschaltete Federn, die den Maschinenrahmen 2 und die daran befestigten Trommelmäher 3 unmittelbar gegenüber dem Anbaubock 6 abspannen. Die Feder 21 greift einerseits am Gelenkpunkt des vierten Lenkers 20 am Anbaubock 6 und andererseits am Maschinenrahmen 2 an.

Zusätzlich oder alternativ können auch eine Entlastungsfeder 23, die einerseits am Anbaubock 6, insbesondere am Anlenkpunkt des vierten Lenkers 20 daran, und andererseits an dem ersten Lenker 10 angreift, sowie eine Entlastungsfeder 22 vorgesehen sein, die einerseits am ersten Lenker 10, insbesondere am Anlenkpunkt des dritten Lenkers 13 daran, und andererseits am Maschinenrahmen 2 angelenkt ist. Die Entlastungsfedern 22 und 23 können auch als Kolbenzylindereinheiten ausgebildet sein. Sie können auch lediglich als Schwenkbegrenzer fungieren und in diesem Fall beispielsweise als Zugseil ausgebildet sein. Sie geben die maximal nach unten gehende Schwenkbewegung des ersten Lenkers bzw. des Viergelenks vor.

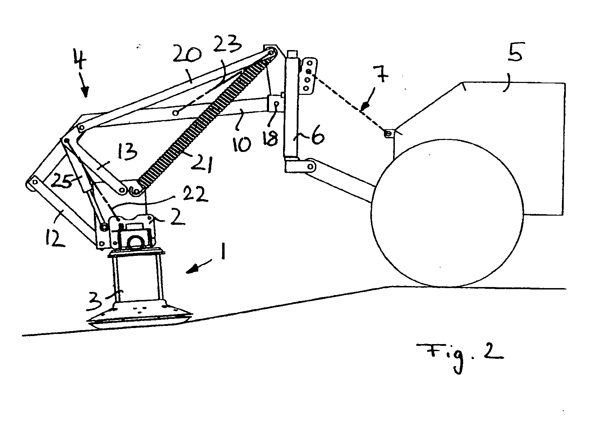

Die Federeinrichtung 21 bzw. 22, 23 wird vorteilhafterweise derart bemessen, dass das Mähwerk mit nur geringem Gewicht auf den Boden drückt und somit leicht und rasch ansprechend jeglicher Bodenkontur folgt, d.h. über Bodenwellen auf und ab geht. Figur 2 zeigt, dass sich das Mähwerk 1 absenkt, sobald es in eine Senke im Boden fährt. Hierbei schwenken einerseits die zweiten und dritten Lenker 12 und 13 nach unten in eine steilere Stellung. Gleichzeitig schwenkt gegenläufig der erste Lenker 10 ebenfalls nach unten, wobei die beiden Schwenkbewegungen des ersten Lenkers 10 einerseits und des zweiten und dritten Lenkers 12 und 13 andererseits durch den vierten Lenker 20 zueinander zwangsgesteuert werden.

Wie Figur 2 zeigt, überlagern sich die Schwenkbewegungen der Lenker 10, 12 und 13 derart, dass das Mähwerk 1 beim Nachuntenfahren gleichzeitig leicht nach vorne nickt. Die Bodenfläche der Trommelmäher 3 neigt sich und folgt der sich nach unten neigenden Bodenkontur (vgl. Figur 2).

Fährt der Mäher hingegen über eine Bodenwelle nach oben, erfolgt eine umgekehrte Schwenkbewegung. Die zweiten und dritten Lenker 12 und 13 nehmen eine weniger geneigte, fast horizontale Stellung ein, während der erste Lenker 10 leicht nach oben geschwenkt wird, und zwar zwangsgesteuert durch den vierten Lenker 20. Hierbei erfolgt eine leichte Nickbewegung des Mähwerks 1 nach hinten, so dass die Bodenfläche der Trommelmäher 3 der ansteigenden Bodenkontur folgt.

Um das Mähwerk 1 beispielsweise zum Zwecke des Transports hochheben zu können, umfasst die Aufhängungsvorrichtung 4 eine eigene Hubvorrichtung 24, mit Hilfe derer das Mähwerk 1 relativ zum Anbaubock 6 angehoben werden kann. In der gezeichneten Ausführungsform besteht die Hubvorrichtung 24 aus einem fremdenergiebetätigten Kraftheber 25, der einerseits am Maschinenrahmen 2 und andererseits am ersten Lenker 10 angelenkt ist. Dabei bewirkt ein Einziehen des Krafthebers 25 nicht nur ein Anheben des Maschinenrahmens 2 relativ zum ersten Lenker 10. Über den vierten Lenker 20 wird gleichzeitig der erste Lenker 10 nach oben geschwenkt.

Es versteht sich, dass alternativ der Kraftheber 25 auch am Anbaubock 6 angreifen könnte und unmittelbar den ersten Lenker 10 oder den Maschinenrahmen 2 nach oben ziehen könnte.

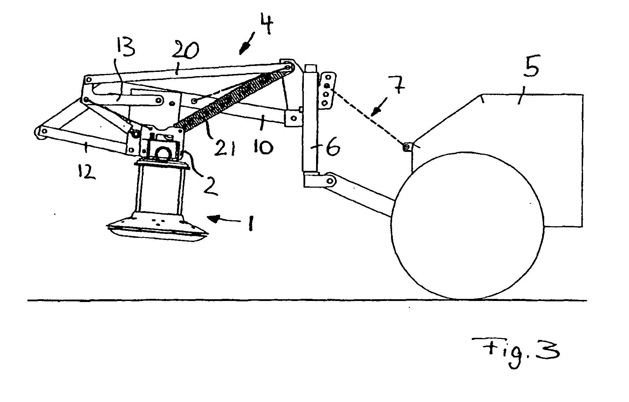

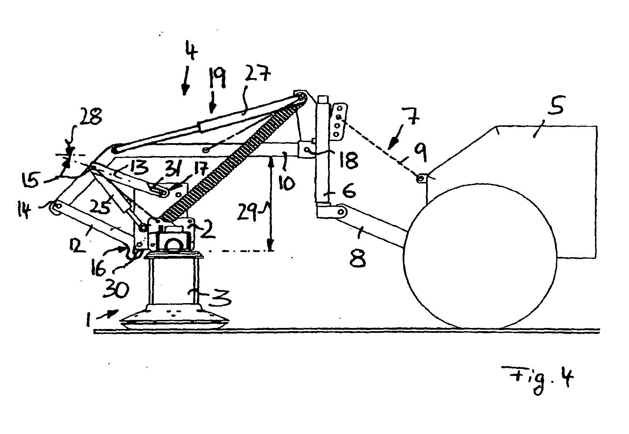

Die alternative Ausführungsform nach Figur 4 ist in ihrem grundsätzlichen Aufbau ähnlich der Ausführung nach den Figuren 1 bis 3, so dass für entsprechende Bauteile dieselben Bezugsziffern verwendet worden sind und insoweit auf die vorangehende Beschreibung verwiesen wird. Im Gegensatz zur ersten Ausführung sind bei dieser Ausführung die Schwenkbewegungen des Viergelenks, das von den zweiten und dritten Lenkern 12 und 13 gebildet wird, und die Schwenkbewegung des ersten Lenkers 10 nicht durch einen vierten Lenker miteinander zwangsgekoppelt. Als Steuervorrichtung für die Bewegungen des ersten Lenkers 10 ist bei dieser Ausführung eine fremdenergiebetätigbare Kolbenzylindereinheit 27 vorgesehen, die einerseits am Anbaubock 6 und andererseits am ersten Lenker 10 angreift. Sie steuert die Schwenkstellung des ersten Lenkers 10 in Abhängigkeit der Stellung des Mähwerks 1. Eine elektronische Steuereinheit, die in den Figuren nicht dargestellt ist und die Kolbenzylindereinheit 27 ansteuert, erhält hierzu ein Signal eines Winkelsensors 28, das die Winkelstellung des dritten Lenkers 13 wiedergibt und/oder ein Signal eines Abstandssensors 29, das den Abstand des Mähwerks 1 von dem ersten Lenker 10 angibt. Die Kolbenzylindereinheit 27 wird in Abhängigkeit der Winkelstellung des dritten Lenkers 13 und/oder in Abhängigkeit des Abstands des Mähwerks 1 vom ersten Lenker 10 um ein bestimmtes Maß bewegt, so dass der erste Lenker 10 in Abhängigkeit der Stellung des Mähwerks 1 eine ebenfalls definierte Stellung einnimmt. Vorteilhafterweise kann eine beliebige Abhängigkeit der Schwenkstellung des ersten Lenkers von der Stellung des Mähwerks 1 vorgegeben werden. Hierdurch kann die Ansprechcharakteristik der Mähwerksaufhängung optimal an verschiedene Bodenkonturen angepasst werden.

Weiterhin unterscheidet sich die Ausführung nach Figur 4 von der Vorhergehenden bezüglich der Ausbildung der Anlenkpunkte 16 und 17 des Maschinenrahmens 2 an dem zweiten und dritten Lenker 12 und 13. Während bei der ersten Ausführung nach den Figuren 1 bis 3 Kugelgelenke die Achsen 16 und 17 definieren und hierüber auch eine Querpendelbewegung des Mähwerks zulassen, ist bei der Ausführung gemäß Figur 4 eine Führung der Anlenkachsen 16 und 17 des Maschinenrahmens 2 in Langlöchern 30 und 31 vorgesehen. Hierdurch kann der Maschinenrahmen 2 mit den daran befestigen Trommelmähern 3 über einen begrenzten Winkelbereich einerseits Nickbewegungen nach vorne und hinten zur Anpassung an Querbodenwellen und andererseits seitliche Nickbewegungen zur Anpassung an Längsbodenwellen ausführen. Wie Figur 4 zeigt, ist der untere Anlenkpunkt 16 in einer Längsnut 30 geführt, die sich quer zur Längsrichtung des zweiten Lenkers 12 erstreckt. Im Gegensatz hierzu ist der obere Anlenkpunkt 17 in einem Langloch 31 geführt, das sich in Längsrichtung des dritten Lenkers 13 erstreckt. Es versteht sich, dass die Anordnung ggf. umgekehrt werden könnte. Es versteht sich ebenfalls, dass die Langlöcher nicht zwangsweise in den Lenkern 12 und 13 ausgebildet sein müssen, sondern auch im Maschinenrahmen 2 ausgebildet sein können, wobei in diesem Fall die Lenker 12 und 13 mit entsprechenden Achszapfen in den im Maschinenrahmen 2 ausgebildeten Langlöchern geführt wären.

Vorteilhafterweise ist der Maschinenrahmen 2 an den zweiten und dritten Lenkern 12 und 13 jeweils beweglich gelagert derart, dass Anpassbewegungen bezüglich des einen Lenkers unabhängig von Anpassbewegungen bezüglich des zweiten Lenkers ausgeführt werden können. Dies kann dadurch erreicht werden, dass die Langlöcher 30 und 31 mit ihren Längsachsen im wesentlichen senkrecht zueinander angeordnet sind. Die Anlenkachse 17 kann in dem Langloch 31 eine Anpassbewegung ausführen, ohne dass die Anlenkachse 16 sich in dem Langloch 30 bewegt. Umgekehrt kann die Anlenkachse 16 gegenüber dem Langloch 30 eine Anpassbewegung ausführen, ohne dass sich die Anlenkachse 17 in dem Langloch 31 bewegen muss. Durch die Unabhängigkeit der möglichen Anpassbewegungen voneinander ergibt sich eine insgesamt verbesserte Bodenanpassung.

Auch wenn die Figuren nur jeweils einen ersten, zweiten, dritten und vierten Lenker zeigen, können selbstverständlich jeweils mehrere Exemplare hiervon in zueinander paralleler Anordnung, insbesondere rechts und links an der Maschine, vorgesehen sein.

## Patentansprüche

1. Aufhängungsvorrichtung für eine Landmaschine, insbesondere frontangebautes Mähwerk, mit einem Anbaubock (6), der über eine Dreipunktanlenkung (7) an einem Schlepper (5) anbaubar ist, einem ersten Lenker (10), der am Anbaubock (6) angelenkt ist und von diesem in Fahrtrichtung des Schleppers (5) auskragt, sowie einem zweiten und dritten Lenker (12, 13), die jeweils einerseits gelenkig an dem ersten Lenker (10) und andererseits gelenkig an einem Maschinenrahmen (2) angelenkt sind, so dass der Maschinenrahmen (2) von dem zweiten und dritten Lenker (12, 13) nach Art eines Viergelenks an dem ersten Lenker (10) aufgehängt und auf und ab bewegbar ist, **dadurch gekennzeichnet, dass** der erste Lenker (10) um eine quer zur Fahrtrichtung verlaufende Schwenkachse (18) schwenkbar an dem Anbaubock (6) gelagert ist.

2. Aufhängungsvorrichtung nach dem vorhergehenden Anspruch, wobei eine Steuervorrichtung (19) zur Steuerung der Schwenkstellung des ersten Lenkers (10) in Abhängigkeit der Stellung des Maschinenrahmens (2) relativ zum ersten Lenker (10) vorgesehen ist.

3. Aufhängungsvorrichtung nach dem vorhergehenden Anspruch, wobei die Steuervorrichtung (19) derart ausgebildet ist, dass der erste Lenker (10) einerseits und die zweiten und dritten Lenker (12, 13) andererseits gegenläufig zueinander schwenken.

4. Aufhängungsvorrichtung nach einem der beiden vorhergehenden Ansprüche, wobei die Steuervorrichtung (19) einen vierten Lenker (20) aufweist, der einerseits gelenkig am Anbaubock (6) und andererseits gelenkig an dem zweiten und/oder dritten Lenker (12, 13) angelenkt ist.

5. Aufhängungsvorrichtung nach dem vorhergehenden Anspruch, wobei der Anlenkpunkt (14, 15) des zweiten oder dritten Lenkers (12, 13) am ersten Lenker (10) zwischen dem Anlenkpunkt (32) des vierten Lenkers (20) an dem genannten zweiten oder dritten Lenker (12, 13) und dem Anlenkpunkt (17) des Maschinenrahmens (2) an dem genannten zweiten oder dritten Lenker (12, 13) angeordnet ist.

6. Aufhängungsvorrichtung nach Anspruch 2 oder 3, wobei die Steuervorrichtung (19) eine Kolbenzylindereinheit (27) oder dgl. aufweist, die einerseits gelenkig an dem ersten Lenker (10) und andererseits gelenkig an dem Anbaubock (6) angreift.

7. Aufhängungsvorrichtung nach dem vorhergehenden Anspruch, wobei die Steuervorrichtung (19) einen Abstandsmesser (29) zur Messung des Abstands der Landmaschine (1, 2, 3) vom ersten Lenker (10) und/oder einen Neigungsmesser (28) zur Messung der Neigung des zweiten oder dritten Lenkers (12, 13) aufweist und die Kolbenzylindereinheit (27) in Abhängigkeit des gemessenen Abstands und/oder der gemessenen Neigung ansteuert.

8. Aufhängungsvorrichtung nach einem der Ansprüche 2 bis 7, wobei die Steuervorrichtung (19) einen Bewegungsdämpfer aufweist.

9. Aufhängungsvorrichtung nach dem vorhergehenden Anspruch, wobei der vierte Lenker (20) längenveränderlich ausgebildet und bezüglich seiner Längenveränderung bewegungsgedämpft ist.

10. Aufhängungsvorrichtung nach einem der vorhergehenden Ansprüche, wobei sich die zweiten und dritten Lenker (12, 13) von ihren Anlenkpunkten (14, 15) am ersten Lenker (10) zum Anbaubock (6) hin erstrecken.

11. Aufhängungsvorrichtung nach einem der vorhergehenden Ansprüche, wobei die zweiten und dritten Lenker (12, 13) im gesamten vorgesehenen Arbeitsbereich bezüglich ihrer Längsachsen etwa parallel, vorzugsweise einen Winkelversatz von weniger als 20° zueinander aufweisen.

12. Aufhängungsvorrichtung nach einem der vorhergehenden Ansprüche, wobei der zweite und/oder der dritte Lenker (12, 13) eine Länge besitzen, die weniger als ¾, vorzugsweise weniger als ½ der Länge des ersten Lenkers (10) beträgt.

13. Aufhängungsvorrichtung nach einem der vorhergehenden Ansprüche, wobei ein Kraftheber (25) zum Anheben der Landmaschine (1) relativ zum Anbaubock (6) vorgesehen ist.

14. Aufhängungsvorrichtung nach dem vorhergehenden Anspruch, wobei der Kraftheber (25) einerseits am Maschinenrahmen (2) und andererseits an dem ersten Lenker (10) oder am Anbaubock (6) angelenkt ist.

15. Aufhängungsvorrichtung nach einem der vorhergehenden Ansprüche, wobei eine Entlastungsfedereinrichtung (21) zur zumindest teilweisen Aufnahme des Gewichts der Landmaschine (1) vorgesehen ist.

16. Aufhängungsvorrichtung nach dem vorhergehenden Anspruch, wobei die Entlastungsfedereinrichtung eine Feder (21) aufweist, die einerseits am Maschinenrahmen (2) und andererseits am Anbaubock (6) angreift.

17. Aufhängungsvorrichtung nach einem der beiden vorhergehenden Ansprüche, wobei die Entlastungsfedereinrichtung eine erste Feder (22) aufweist, die einerseits am Maschinenrahmen (2) und/oder am zweiten oder dritten Lenker (12, 13) und andererseits am ersten Lenker (10) angreift, und/oder eine zweite Feder (23) aufweist, die einerseits am Anbaubock (6) und andererseits am ersten Lenker (10) angreift.

18. Aufhängungsvorrichtung nach einem der vorhergehenden Ansprüche, wobei der zweite und/oder der dritte Lenker (12, 13) längenveränderbar, insbesondere teleskopierbar ausgebildet ist.

19. Aufhängungsvorrichtung nach einem der vorhergehenden Ansprüche, wobei der Maschinenrahmen (2) an dem zweiten und dritten Lenker (12, 13) um eine in Fahrtrichtung sich erstreckende Achse schwenkbar aufgehängt ist.

20. Aufhängungsvorrichtung nach einem der vorhergehenden Ansprüche, wobei der Maschinenrahmen (2) an dem zweiten und dritten Lenker (12, 13) um eine zur Fahrtrichtung querverlaufende Achse schwenkbar aufgehängt ist.

21. Aufhängungsvorrichtung nach einem der vorhergehenden Ansprüche, wobei der Maschinenrahmen (2) relativ zu dem zweiten Lenker (12) und relativ zu dem dritten Lenker (13) jeweils verschieblich gelagert ist, wobei der Maschinenrahmen (2) relativ zum zweiten Lenker (12) unabhängig von einer Bewegung relativ zum dritten Lenker (13) und umgekehrt bewegbar ist.

22. Aufhängungsvorrichtung nach einem der vorhergehenden Ansprüche, wobei der Maschinenrahmen (2) an den zweiten und dritten Lenkern (12, 13) jeweils in einer Langlochführung (30, 31) geführt ist, wobei die Langlochführung (30) an dem zweiten Lenker (12) mit ihrer Längsachse im wesentlichen senkrecht zur Längsachse der Langlochführung (31) an dem dritten Lenker (13) ausgerichtet ist.

## Claims

1. A mounting apparatus for an agricultural machine, in particular for a front installed mower, comprising an installation block (6) which can be installed on a tractor (5) via a three-point pivotal connection, a first connector (10) which is pivotally connected to the installation block (6) and projects away from it in the direction of travel of the tractor (5), and second and third connectors (12, 13) which are each pivotally connected to the first connector (10), on the one hand, and pivotally connected to a machine frame (2), on the other hand, so that the machine frame (2) is mounted on the first connector (10) by the second and third connectors (12, 13) in the manner of a four-bar linkage and is movable up and down, **characterized in that** the first connector (10) is pivotably supported on the installation block (6) around a pivot axis (18) extending transversely to the direction of travel.

2. A mounting apparatus in accordance with the preceding claim, wherein a control apparatus (19) is provided for the control of the pivot position of the first connector (10) in dependence on the position of the machine frame (2) relative to the first connector (10).

3. A mounting apparatus in accordance with the preceding claim, wherein the control device (19) is made such that the first connector (10), on the one hand, and the second and third connectors (12, 13), on the other hand, pivot in opposite directions to one another.

4. A mounting apparatus in accordance with one of the two preceding claims, wherein the control apparatus (19) has a fourth connector (20) which is pivotally connected to the installation block, on the one hand, and is pivotally connected to the second and/or third connectors (12, 13), on the other hand.

5. A mounting apparatus in accordance with the preceding claim, wherein the pivot point (14, 15) of the second or third connectors (12, 13) is arranged on the first connector (10) between the pivot point (32) of the fourth connector (20) on the named second or third connectors (12, 13) and the pivot point (17) of the machine frame (2) on the named second or third connectors (12, 13).

6. A mounting apparatus in accordance with either of claims 2 or 3, wherein the control apparatus (19) has a piston-in-cylinder unit (27) or the like which engages pivotally at the first connector (10), on the one hand, and engages pivotally at the installation block (6), on the other hand.

7. A mounting apparatus in accordance with the preceding claim, wherein the control apparatus (19) has a distance measuring device (29) for the measurement of the distance of the agricultural machine (1, 2, 3) from the first connector (10) and/or has an inclination measurement device (28) for the measurement of the inclination of the second or third connectors (12, 13) and controls the piston-in-cylinder unit (27) in dependence on the measured distance and/or on the measured inclination.

8. A mounting apparatus in accordance with one of the claims 2 to 7, wherein the control apparatus (19) has a movement damper.

9. A mounting apparatus in accordance with the preceding claim, wherein the fourth connector (20) is made length changeable and is movement damped with respect to its length change.

10. A mounting apparatus in accordance with one of the preceding claims, wherein the second and third connectors (12, 13) extend from their pivot points (14, 15) at the first connector (10) to the installation block (6).

11. A mounting apparatus in accordance with one of the preceding claims, wherein the second and third connectors (12, 13) preferably have an angular offset of less than 20° with respect to one another in the provided total working range approximately parallel with respect to their longitudinal axes.

12. A mounting apparatus in accordance with one of the preceding claims, wherein the second and/or third connectors (12, 13) have a length which is less than 3/4, preferably less than 1/2, of the length of the first connector (10).

13. A mounting apparatus in accordance with one of the preceding claims, wherein a power lift (25) is provided for the raising of the agricultural machine (1) relative to the installation block (6).

14. A mounting apparatus in accordance with the preceding claim, wherein the power lift (25) is pivotally connected to the machine frame (2), on the one hand, and to the first connector (10) or to the installation block (6), on the other hand.

15. A mounting apparatus in accordance with one of the preceding claims, wherein a relieving spring device (21) is provided for the at least partial take-up of the weight of the agricultural machine (1).

16. A mounting apparatus in accordance with the preceding claim, wherein the relieving spring device has a spring (21) which engages at the machine frame (2), on the one hand, and at the installation block (6), on the other hand.

17. A mounting apparatus in accordance with one of the two preceding claims, wherein the relieving spring device has a first spring (22) which engages at the machine frame (2) and/or at the second or third connectors (12, 13), on the one hand, and at the first connector (10), on the other hand, and/or has a second spring (23), which engages at the installation block (6), on the one hand, and at the first connector (10), on the other hand.

18. A mounting apparatus in accordance with one of the preceding claims, wherein the second and/or the third connectors (12, 13) are made longitudinally changeable, in particular telescopic.

19. A mounting apparatus in accordance with one of the preceding claims, wherein the machine frame (2) is mounted at the second and third connectors (12, 13) pivotably around an axis extending in the direction of travel.

20. A mounting apparatus in accordance with one of the preceding claims, wherein the machine frame (2) is mounted at the second and third connectors (12, 13) pivotably around an axis extending transversely to the direction of travel.

21. A mounting apparatus in accordance with one of the preceding claims, wherein the machine frame (2) is respectively displaceably supported relative to the second connector (12) and relative to the third connector (13), with the machine frame (2) being movable relative to the second connector (12) independently of a movement relative to the third connector (13) and vice versa.

22. A mounting apparatus in accordance with one of the preceding claims, wherein the machine frame (2) is guided in a respective elongate hole guide (30, 31) at the second and third connectors (12, 13), with the longitudinal axis of the elongate hole guide (30) being aligned at the second connector (12) substantially perpendicular to the longitudinal axis of the elongate hole guide (31) at the third connector (13).

## Revendications

1. Dispositif d'accouplement d'une machine agricole, en particulier d'une faucheuse, en particulier rapportée frontalement, avec un support porté (6), qui peut être monté par une articulation à trois points (7) à un tracteur (5), avec une première bielle (10) qui est articulée au support porté (6) et fait saillie de celui-ci dans la direction d'avancement du tracteur (5), et avec une deuxième et troisième bielle (12, 13) qui sont articulées chacune, d'une part, d'une manière articulée à la première bielle (10) et, d'autre part, d'une manière articulée à un châssis de machine (2) de sorte que le châssis de machine (2) est suspendu par la deuxième et la troisième bielle (12, 13) à la manière de quatre joints articulés à la première bielle (10) et est déplaçable vers le haut et vers le bas, **caractérisé en ce que** la première bielle (10) est logée d'une manière pivotante au support porté (6) autour d'un axe de pivotement s'étendant transversalement à la direction d'avancement.

2. Dispositif d'accouplement selon la revendication précédente, où est prévu un dispositif de commande (19) pour commander la position de pivotement de la première bielle (10) en fonction de la position du châssis de machine (2) relativement à la première bielle (10).

3. Dispositif d'accouplement selon la revendication précédente, où le dispositif de commande (19) est réalisé de telle sorte que la première bielle (10), d'une part, et les deuxième et troisième bielles (12, 13), d'autre part, pivotent d'une manière opposée l'une relativement aux autres.

4. Dispositif d'accouplement selon l'une des deux revendications précédentes, où le dispositif de commande (19) présente une quatrième bielle (20) qui est articulée, d'une part, d'une manière articulée au support de montage (6) et, d'autre part, d'une manière articulée à la deuxième et/ou troisième bielle (12, 13).

5. Dispositif d'accouplement selon la revendication précédente, où le point d'articulation (14, 15) de la deuxième ou troisième bielle (12, 13) à la première bielle (10) est disposé entre le point d'articulation (32) de la quatrième bielle (20) à la deuxième ou troisième bielle précitée (12, 13) et au point d'articulation (17) du châssis de machine (2) à la deuxième ou troisième bielle précitée (12, 13).

6. Dispositif d'accouplement selon la revendication 2 ou 3, où le dispositif de commande (19) présente une unité à piston et à cylindre (27) ou analogue qui s'applique, d'une part, d'une manière articulée à la première bielle (10) et, d'autre part, d'une manière articulée au support de montage (6).

7. Dispositif d'accouplement selon la revendication précédente, où le dispositif de commande (19) présente un organe de mesure d'écart (29) pour mesurer l'écart de la machine agricole (1, 2, 3) de la première bielle (10) et/ou un organe de mesure d'inclinaison (28) pour mesurer l'inclinaison de la deuxième ou troisième bielle (12, 13) et commande l'unité à piston et à cylindre (27) en fonction de l'écart mesuré et/ou de l'inclinaison mesurée.

8. Dispositif d'accouplement selon l'une des revendications 2 à 7, où le dispositif de commande (19) présente un amortisseur de mouvement.

9. Dispositif d'accouplement selon la revendication précédente, où la quatrième bielle (20) est réalisée d'une manière modifiable en longueur et est amortie en mouvement relativement à sa modification en longueur.

10. Dispositif d'accouplement selon l'une des revendications précédentes, où les deuxième et troisième bielles (12, 13) s'étendent de leurs points d'articulation (14, 15) à la première bielle (10) vers le support porté (6) .

11. Dispositif d'accouplement selon l'une des revendications précédentes, où les deuxième et troisième bielles (12, 13), dans toute la zone de travail prévue, relativement à leurs axes longitudinaux, sont à peu près parallèles, de préférence présentent un décalage angulaire inférieur à 20°.

12. Dispositif d'accouplement selon l'une des revendications précédentes, où la deuxième et/ou troisième bielle (12, 13) possèdent une longueur qui représente moins que ¾, de préférence moins que ½ de la longueur de la première bielle (10).

13. Dispositif d'accouplement selon l'une des revendications précédentes, où est prévu un vérin (25) pour relever la machine agricole (1) relativement au support porté (6).

14. Dispositif d'accouplement selon la revendication précédente, où le vérin (25) est articulé, d'une part, au châssis de machine (2), et d'autre part, à la première bielle (10) ou au support porté (6).

15. Dispositif d'accouplement selon l'une des revendications précédentes, où est prévue une installation à ressort de décharge (21) pour la réception au moins partielle du poids de la machine agricole (1).

16. Dispositif d'accouplement selon la revendication précédente, où l'installation à ressort de décharge présente un ressort (21) qui s'applique, d'une part, au châssis de machine (2) et, d'autre part au support porté (6) .

17. Dispositif d'accouplement selon l'une des deux revendications précédentes, où l'installation à ressort de décharge présente un premier ressort (22) qui s'applique, d'une part, au châssis de machine (2) et/ou à la deuxième et/ou troisième bielle (12, 13) et, d'autre part, à la première bielle (10) et/ou présente un deuxième ressort (23) qui s'applique, d'une part, au support porté (6) et d'autre part à la première bielle (10).

18. Dispositif d'accouplement selon l'une des revendications précédentes, où la deuxième et/ou troisième bielle (12, 13) est réalisée d'une manière modifiable en longueur, en particulier de manière télescopique.

19. Dispositif d'accouplement selon l'une des revendications précédentes, où le châssis de machine (2) est accouplé à la deuxième et troisième bielle (12, 13) d'une manière pivotante autour d'un axe s'étendant dans la direction d'avancement.

20. Dispositif d'accouplement selon l'une des revendications précédentes, où le châssis de machine (2) est accouplé à la deuxième et troisième bielle (12, 13) d'une manière pivotante autour d'un axe s'étendant transversalement à la direction d'avancement.

21. Dispositif d'accouplement selon l'une des revendications précédentes, où le châssis de machine (2) est logé d'une manière respectivement déplaçable relativement à la deuxième bielle (12) et relativement à la troisième bielle (13), où le châssis de machine (2), relativement à la deuxième bielle (12), est déplaçable indépendamment d'un mouvement relativement à la troisième bielle (13) et inversement.

22. Dispositif d'accouplement selon l'une des revendications précédentes, où le châssis de machine (2) est guidé à la deuxième et troisième bielle (12, 13), respectivement dans un guidage de trou oblong (30, 31), où le guidage de trou oblong (30) à la deuxième bielle (12) avec son axe longitudinal est orienté sensiblement perpendiculairement à l'axe longitudinal du guidage de trou oblong (31) à la troisième bielle (13).
